Europäisches Patentamt

European Patent Office

Office européen des brevets

(19)

(11) Veröffentlichungsnummer: **0 307 355**
A2

(12) # EUROPÄISCHE PATENTANMELDUNG

(21) Anmeldenummer: 88810587.1

(22) Anmeldetag: 25.08.88

(51) Int. Cl.⁴: **A 01 G 5/00**
A 01 G 3/00, B 26 B 27/00

(30) Priorität: 08.09.87 CH 3420/87

(43) Veröffentlichungstag der Anmeldung:
15.03.89 Patentblatt 89/11

(84) Benannte Vertragsstaaten: **DE FR GB IT**

(71) Anmelder: Roth, Paul
Chemin de Froideville 3 Les Tuileries-de-G'son
CH-1422 Grandson (CH)

(72) Erfinder: Roth, Paul
Chemin de Froideville 3 Les Tuileries-de-G'son
CH-1422 Grandson (CH)

(54) **Schnittblumenmesser.**

(57) Das neue Handwerkzeug in Form eines Blumenmessers schneidet Blumenstiele mit einem beweglichen rasierklingenartigen Messer durch Knopfdruck haarscharf und z.B. 45° schräg ab. Die Blumenstielführungen sind vorne links und rechts 45° schräg ausgeführt, um ein Schrägschneiden von beiden Seiten leicht zu gewährleisten. Das Messer ist nur mit einer Schraube befestigt und kann jederzeit schnell von jedermann ausgewechselt werden. Dieses Blumenmesser kann durch eine Kordel um den Hals getragen werden. Auch frei in einer Hand gehalten oder auf einem Tisch liegend ist es immer schnittbereit und braucht keine praktische Geschicklichkeit.

EP 0 307 355 A2

## Beschreibung

### Handwerkzeug zum Schrägabschneiden von Schnittblumenstielen und dgl.

Gegenstand der Erfindung ist ein Handwerkzeug zum Schrägabschneiden und schrägen Nachschneiden von Schnittblumenstielen und dgl.

Schnittblumen sollten mit einem sehr scharfen Messer, am besten mit einem Rasiermesser schräg geschnitten und nachgeschnitten werden, damit sich der Querschnitt der Wasserleitungen vergrössert und ein sauberer scharfer Schnitt die einzelnen Wasserleitungen möglichst wenig verletzt, und insbesondere nicht zusammenquetscht, wie dies bei Verwendung einer Schere oder eines gewöhnlichen Messers meist der Fall ist. Am besten kann ein solcher sauberer Schnitt erreicht werden, wenn die Messerklinge einen sog. ziehenden Schnitt ausführt, d.h. sich beim Schneiden nicht nur senkrecht zur Schneidkante, sondern auch mit einer Längskomponente bewegt. Die Erfindung bezweckt die Schaffung eines Handwerkzeuges, das gerade diese Bedingung auf Grund seiner besonderen Konstruktion erfüllt. Das erfindungsgemässe Handwerkzeug zeichnet sich dadruch aus, dass ein Klingenträger mit einer blattförmigen Schneidklinge in einem Messergehäuse mit Gegenschnittfläche um eine Drehachse schwenkbar gelagert ist, welche Achse derart ausserhalb der Schneidkanten-Geraden der Klinge liegt, dass die Schneidkante beim Verschwenken des Klingenträgers auf die Gegenschnittfläche zu eine ziehende Schneidbewegung ausführt.

Die Drehachse der Schneidbewegung liegt dabei vorteilhaft oberhalb der Schneidkanten-Geraden.

Vorzugsweise hält eine Gegendruckfeder den Klingenträger in der Offenstellung, in welcher die Schneidklinge im Gehäuse verdeckt ist. Dadurch wird das Instrument für Erwachsene und Kinder völlig ungefährlich.

Ein Ausführungsbeispiel der Erfindung wird im folgenden anhand der beiliegenden Zeichnungen näher beschrieben. Es zeigen:

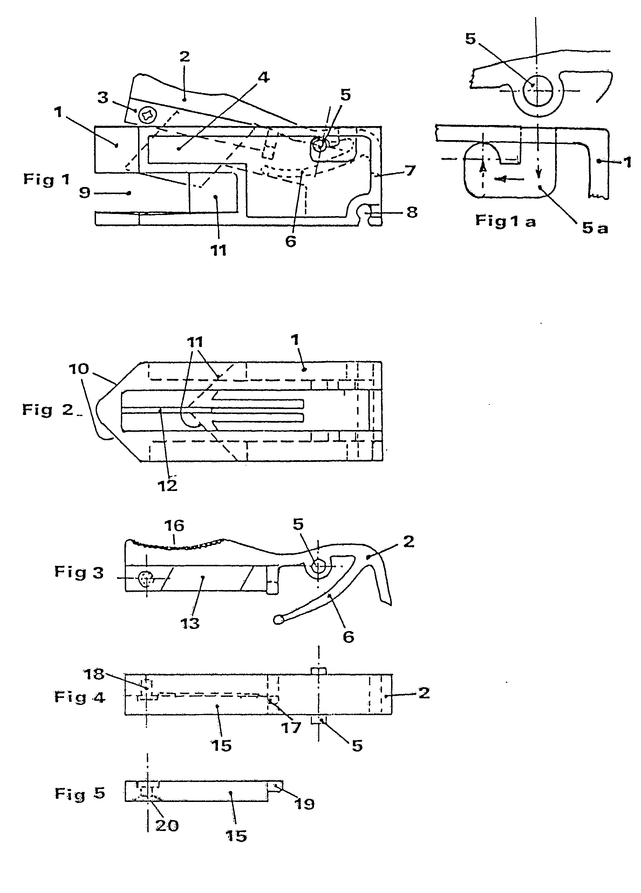

Fig 1) Eine seitliche Ansicht des Messerblocks 1 mit montiertem Messerträger 2, welcher das Messer 4 durch die Plastikbride 3 eingespannt hält. Der Messerträger ist durch die Achse 5 geführt und wird durch die Plastikfeder 6 nach oben an den Anschlag 7 gedrückt und offen gehalten. Der Schlitz 8 ist so ausgebildet, dass man eine Kordel einrasten kann, damit das Werkzeug um den Hals gehängt, immer griffbereit ist. Die Schneidöffnung 9 nimmt das Schneidgut auf.

Fig la) zeigt ein Detail, wie die Achse 5 des Messerträgers 2 in den Messerblock einrastet. Der Messerträger wird nach unten in den Schlitz 5a gedrückt und dann nach links verschoben. Am linken Rand wird er automatisch durch die Plastikfeder 6 nach oben gedrückt, wo die Achse die Endposition einnimmt. Das Ausklinken des Messerträgers, bei jedem Messerwechsel notwendig, erfolgt in der entgegengesetzten Richtung der Pfeile.

Fig 2) zeigt eine Draufsicht des Messerblocks. 10 zeigt die vorderen zwei Schrägen, je 45°, und die beiden Führungsflächen 11, die das Schneidgut so positionnieren, dass es 45° nach links oder nach rechts abgeschnitten wird. Der Schlitz 12 führt das Messer 4 bei der Bewegung nach unten.

Fig 3) zeigt den Messerträger 2 mit der Messerführung 13, die Führungsachse 5 und die Kunststoff-Feder 6. Die Rundung 16 ist randiert und bildet eine Daumenauflage.

Fig 4) zeigt eine Draufsicht des Messerträgers 2. 17 ist eine Aussparung, welche die Messerbride auf der rechten Seite aufnimmt und nur mit einer Schraube auf der linken Seite durch das Gewindeloch 18 befestigt wird.

Fig 5) zeigt die Messerbride 15, die mit dem rechten Nocken 19 einrastet und mit einer Schraube durch das Loch 20 das Messer festklemmt.

## Patentansprüche

1. Handwerkzeug zum Schrägschneiden und schrägen Nachschneiden von Schnittblumenstielen und dgl., dadurch gekennzeichnet, dass ein Klingenträger mit einer blattförmigen Schneidklinge in einem Messergehäuse mit Gegenschnittfläche um eine Drehachse schwenkbar gelagert ist, welche Achse derart ausserhalb der Schneidkanten-Geraden der Klinge liegt, dass die Schneidkante beim Verschwenken des Klingenträgers auf die Gegenschnittfläche zu eine ziehende Schneidbewegung ausführt.

2. Handwerkzeug nach Anspruch 1, dadurch gekennzeichnet, dass eine Gegendruckfeder (6) den Klingenträger (2) in der Offenstellung hält, in welcher die Schneidklinge (4) im Gehäuse (1) verdeckt ist.

3. Handwerkzeug nach Anspruch 1 und 2, dadurch gekennzeichnet, dass der Klingenträger (2) mittels der Drehachse (5) in einer Lagernut (5a) des Gehäuses (1) herausschiebbar eingerastet ist und mittels der Gegendruckfeder (6) in seiner Lage gehalten wird.

4. Handwerkzeug nach Anspruch 1, dadurch gekennzeichnet, dass das Gehäuse (1) in der Schneidöffnung (9) zwei symmetrisch schräge Führungsflächen (11) aufweist, gegen welche das Schneidgut beim Abschneiden angelegt werden kann.

5. Handwerkzeug nach Anspruch 1 und 2, dadurch gekennzeichnet, dass mindestens der Klingenträger (2) aus Kunststoff besteht, und dass die Gegendruckfeder (6) an diesem einstückig angeformt ist.

6. Handwerkzeug nach Anspruch 1, dadurch gekennzeichnet, dass die Schneidklinge (4) am Klingenträger (2) mittels eines Klemmblocks (15) auswechselbar befestigt ist.

7. Handwerkzeug nach Anspruch 1, dadurch gekennzeichnet, dass das Messergehäuse (1) eine Ausnehmung (8) aufweist, in welche eine Tragkordel eingerastet werden kann.

Fig 1

Fig 1 a

Fig 2

Fig 3

Fig 4

Fig 5